# FASCICULE DE BREVET EUROPEEN

(11) **EP 3 445 724 B1**
(45) Date de publication et mention de la délivrance du brevet: **05.04.2023**
(21) Numéro de dépôt: 17716556.0
(22) Date de dépôt: 14.04.2017
(51) Int. Cl.: C02F 3/00, C02F 3/20

(54) **RÉGULATION D'UN SYSTÈME DE PRODUCTION D'AIR CENTRALISÉ POUR UNE USINE DE TRAITEMENT DES EAUX USÉES**
STEUERUNG EINES ZENTRALISIERTEN LUFTPRODUKTIONSSYSTEMS FÜR EINE ABWASSERKLÄRANLAGE
CONTROL OF A CENTRALISED AIR PRODUCTION SYSTEM FOR A WASTEWATER TREATMENT PLANT

(30) Priorité: 18.04.2016 FR 1600647
(43) Date de publication de la demande: 27.02.2019
(73) Titulaire: Suez International, 92040 Paris la Défense Cedex (FR)
(72) Inventeur: MAS, Thibaut, 78400 Chatou (FR); FLIESS, Michel, 75010 Paris (FR)
(74) Mandataire: Atout PI Laplace
(86) Numéro de dépôt international: PCT/EP2017/059051
(87) Numéro de publication internationale: WO 2017/182405

(56) Documents cités:
- PIOTROWSKI ET AL: "Hierarchical dissolved oxygen control for activated sludge processes", CONTROL ENGINEERING PRACTICE, PERGAMON PRESS, OXFORD, GB, vol. 16, no. 1, 5 novembre 2007 (2007-11-05), pages 114-131, XP022328212, ISSN: 0967-0661, DOI: 10.1016/J.CONENGPRAC.2007.04.005
- HARJA GABRIEL ET AL: "Improvements in Dissolved Oxygen Control of an Activated Sludge Wastewater Treatment Process", CIRCUITS, SYSTEMS AND SIGNAL PROCESSING, CAMBRIDGE, MS, US, vol. 35, no. 6, 9 mars 2016 (2016-03-09), pages 2259-2281, XP035802527, ISSN: 0278-081X, DOI: 10.1007/S00034-016-0282-Y [extrait le 2016-03-09]
- GREGOR KANDARE ET AL: "Adaptive control of the oxidation ditch reactors in a wastewater treatment plant", INTERNATIONAL JOURNAL OF ADAPTIVE CONTROL AND SIGNALPROCESSING., vol. 26, no. 10, 2 octobre 2012 (2012-10-02), pages 976-989, XP055323776, GB ISSN: 0890-6327, DOI: 10.1002/acs.2273
- RUANO M V ET AL: "A systematic approach for fine-tuning of fuzzy controllers applied to WWTPs", ENVIRONMENTAL MODELLING & SOFTWARE, ELSEVIER, AMSTERDAM, NL, vol. 25, no. 5, 1 mai 2010 (2010-05-01), pages 670-676, XP026882976, ISSN: 1364-8152, DOI: 10.1016/J.ENVSOFT.2009.05.008 [extrait le 2009-06-18]

## Description

### DOMAINE TECHNIQUE DE L'INVENTION

L'invention se rapporte à la régulation d'un système de production d'air centralisé alimentant les bassins du traitement biologique d'une usine de traitement des eaux usées (STEP).

### ETAT DE LA TECHNIQUE ANTERIEURE

La production d'air dans les usines de traitement des eaux usées représente un des postes de dépense énergétique les plus importants pour ce type d'usines. Les grosses usines de traitement des eaux usées comportent généralement plusieurs bassins de traitement biologiques, chacun de ces bassins devant être alimenté en oxygène pour que les bactéries, présentes dans les bassins, puissent dégrader la pollution entrante.

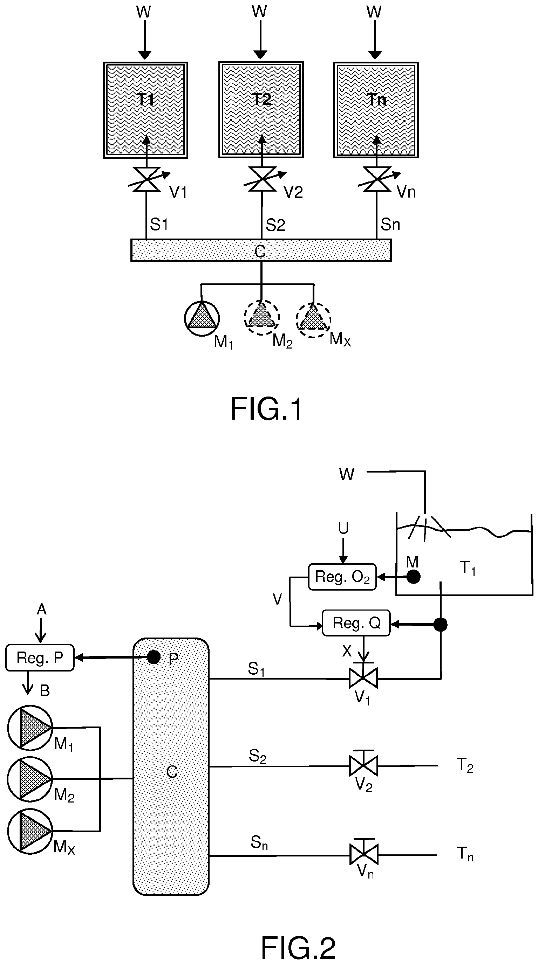

La figure 1 illustre de façon schématique l'alimentation en air d'une usine de traitement des eaux usées connue de l'art antérieur. Généralement, une usine de traitement des eaux usées comporte un à plusieurs bassins biologiques (T₁, T₂,..., Tₙ), dans lesquels l'eau à traiter W est envoyée, chacun desdits bassins comportant un système de diffusion d'air, qui peut être du type membranaire par exemple. La production d'air, destinée aux bassins biologiques, est assurée par une ou plusieurs machines de production d'air (M₁, M₂,..., Mₓ). L'air sortant des machines est distribué, dans cet exemple, dans une canalisation commune d'alimentation C, appelée « Carnau ». L'alimentation en air de chacun des bassins de l'usine, lorsque l'usine comporte plusieurs bassins, se fait indépendamment au travers d'un soutirage d'air (S₁, S₂,..., Sₙ), propre à chaque bassin, sur le carnau commun. Chacun des soutirages d'air est équipé d'une ou plusieurs vannes de régulation d'air (V1, V2,..., Vₘ). Dans l'exemple illustré à la figure 1, chacun des soutirages d'air comporte une seule vanne d'alimentation (V1, V2, VN). Le nombre de soutirages d'air peut être différent du nombre de machines de production d'air.

La régulation actuelle des vannes utilisées pour la production d'air centralisée d'une usine de traitement des eaux usées est illustrée à la figure 2. A la figure 2 sont visibles des machines de production d'air (M₁,M₂,...,Mₓ), par exemple du type soufflantes d'air centrifuge, compresseur à vis, ou roots, plusieurs lignes de soutirage d'air (S₁, S₂, ..., Sₙ), un carnau commun C et les bassins de traitement biologiques (T₁,T₂,...,Tₙ) présentant tous la même configuration que le bassin T₁ ici représenté.

Le débit d'air est régulé pour maintenir la concentration d'oxygène dissous dans chaque bassin à une valeur prédéterminée. On entend par oxygène dissous, dans le cadre de la présente demande, l'oxygène formant avec l'eau un mélange homogène. L'ouverture de la vanne d'entrée d'air est régulée pour assurer la consigne de débit d'air. La production de la centrale d'air est régulée pour maintenir une pression dans la tuyauterie commune d'alimentation.

La régulation de l'alimentation en air dans ce système se fait à l'aide de deux moyens de contrôles distincts.

Le premier moyen de contrôle vise à réguler la pression dans le carnau à une pression constante au moyen d'un régulateur PID (Proportionnel Intégrale Dérivée), représenté Reg. P sur la figure 2. Le régulateur proportionnel reçoit en entrée une mesure de pression P dans le carnau et la consigne de pression A dans le carnau et envoie en sortie une commande B aux machines de production d'air M.

Le deuxième moyen de contrôle comporte deux régulateurs PID en cascade et régule l'apport en oxygène dans les bassins biologiques T en contrôlant l'ouverture/fermeture de chacune des vannes (V₁, V₂,...,Vₘ) des soutirages (S₁, S₂,...,Sₙ). L'ouverture de la vanne d'une ligne est contrôlée au moyen de deux régulateurs PID (Reg. 02, Reg. Q) en cascade. Le contrôle de l'ouverture de la vanne permet de réguler le débit d'air envoyé dans le bassin.

Le premier régulateur PID, représenté Reg. 02 sur la figure 2, reçoit en entrée la mesure d'oxygène dissous dans le bassin via un capteur de mesure M, et reçoit une consigne U dite consigne oxygène. Cette consigne peut être fixe et modifiable par un opérateur de supervision en fonction de l'évolution des paramètres d'exploitation, soit elle est calculée en fonction d'une mesure du potentiel d'oxydoréduction dans le bassin. La sortie v du premier régulateur Reg.02 est envoyée comme consigne du deuxième régulateur PID, représenté Reg.Q sur la figure 2. Il s'agit d'une consigne de débit d'air. Cette valeur de consigne v est convertie en Nm³/h entre deux valeurs mini et maxi paramétrables en fonction des impositions du constructeur des moyens d'insufflation d'air. Cet encadrement entre deux valeurs permet d'éviter que les machines de production d'air n'entrent dans leur zone de résonnance.

Le deuxième régulateur Reg.Q reçoit donc en consigne la sortie v du premier régulateur Reg.02 et reçoit en entrée la mesure de débit d'air du bassin obtenue via un débitmètre N. En sortie du deuxième régulateur Reg.Q, une consigne de position d'ouverture x est envoyée à une vanne de régulation d'air V1.

Ainsi, ce deuxième moyen de contrôle requiert la présence de capteurs dans les bassins (potentiel d'oxydoréduction, mesure d'oxygène etc.) pour déterminer le débit d'oxygène requis.

La régulation PID (proportionnelle intégrale dérivée) présente l'inconvénient de voir ses performances se détériorer lorsque les caractéristiques du système évoluent.

Le système de régulation existant propose ainsi un fonctionnement avec une pression dans le carnau constante, et une variation de débit d'air envoyée dans les bassins modulée seulement par l'ouverture/fermeture partielle, ou non, des vannes. La valeur de la pression dans le carnau, est réglée pour un instant de demande maximale en air dans les bassins afin de pouvoir répondre à une demande de traitement élevée. Ainsi lorsque la station doit traiter un pic de pollution sur une période T, par exemple sur une journée entre 19h et 22h, typiquement après que les riverains aient pris leurs douches, il est nécessaire que le débit d'air dans les bassins puisse répondre à cette demande élevée. La pression dans le carnau est ainsi réglée à une valeur élevée afin de répondre aux besoins de la station dans ce cas de fonctionnement maximal, ce qui engendre des coûts élevés et seule la régulation du degré d'ouverture de la vanne permet de moduler le débit d'air au cours de la journée. Cette régulation de l'ouverture/fermeture des vannes entraîne une usure prématurée desdites vannes.

Le document PIOTROWSKI ET AL: "Hierarchical dissolved oxygen control for activated sludge processes", CONTROL ENGINEERING PRACTICE, PERGAMON PRESS, OXFORD, GB, vol. 16, n. 1, 2007-11-05, pages 114-131 divulgue un procédé de régulation d'alimentation en air de bassins biologiques, comprenant le contrôle de la pression d'air et l'ouverture d'une vanne d'alimentation d'air dans le système d'aération.

### EXPOSE DE L'INVENTION

L'invention vise à proposer des moyens pour réduire la consommation énergétique des machines de production d'air, tout en assurant un débit d'air optimal pour l'oxygénation du bassin biologique en fonction des besoins en air dudit bassin biologique.

Dans ce dessein, l'invention a pour objet un procédé de régulation de l'alimentation en air d'au moins un bassin biologique de traitement d'eau, ledit au moins un bassin biologique de traitement d'eau étant alimenté en air par un système comportant :
- au moins une machine de production d'air ;
- au moins un système de distribution en air du bassin biologique, ledit système comprenant :
   - un moyen de distribution d'air reliant la machine de production d'air au bassin biologique, le moyen de distribution d'air comprenant une vanne d'alimentation;
   - un premier moyen de régulation de la pression de la machine de production d'air, comprenant un moyen d'analyse par série temporelle
   - un moyen de diffusion d'air reliant le moyen de distribution d'air au bassin biologique
   - un moyen de mesure du débit du moyen de diffusion d'air, ledit moyen de mesure du débit étant relié au moyen d'analyse par série temporelle du premier moyen de régulation
   - ledit premier moyen de régulation recevant une valeur de pression du moyen de distribution d'air et la consigne de pression variable dans le temps et délivrant en réponse une valeur de pression envoyée comme consigne de pression à la machine de production d'air,
- un deuxième moyen de régulation de l'ouverture de ladite vanne d'alimentation
ledit procédé comprenant :
- une étape préliminaire de caractérisation de la vanne d'alimentation du moyen de distribution d'air par le deuxième moyen de régulation, l'étape préliminaire comprenant recevoir une mesure d'un paramètre physico-chimique du bassin biologique et une consigne prédéterminée d'ouverture de vanne d'alimentation et fixer un degré d'ouverture de la vanne d'alimentation en fonction d'une caractérisation de la vanne réalisée sur site ;
- une étape de détermination, pour un pas de temps prédéterminé, d'une occurrence temporelle d'une demande maximale en air du bassin biologique et d'une vitesse d'accroissement de la demande en air du bassin biologique;
- une étape de calcul comprenant recevoir au moyen de régulation une valeur de pression du moyen de distribution d'air et une consigne calculée pour une durée à venir correspondant au pas de temps prédéterminé de pression variable dans le temps et calculer par le premier moyen de régulation une valeur de pression de commande, pour une durée à venir correspondant au pas de temps prédéterminé à envoyer à la machine de production d'air en fonction de :
   - l'occurrence temporelle de la demande maximale en air du bassin biologique,
   - la vitesse d'accroissement de la demande en air du bassin biologique,
   - la demande en air du bassin biologique.

On entend par demande en air la quantité d'air requise pour maintenir un taux d'oxygène dans le bassin fixé préalablement en fonction du processus biologique mis en oeuvre dans le bassin biologique.

Ainsi, la pression de la machine de production d'air est variable et ajustable en fonction de la demande saisonnière en oxygène du bassin. En faisant varier la pression d'air dans le moyen de distribution d'air en continu, ce système permet d'optimiser la consommation énergétique des machines de production d'air et limite ainsi le coût de fonctionnement lié à l'alimentation en air des bassins biologiques. En effet, il est plus avantageux énergétiquement de maintenir des vannes d'alimentation du système de distribution d'air ouvertes ou quasi ouvertes en faisant varier la pression des machines de production d'air afin d'ajuster le débit d'air en entrée du bassin biologique plutôt que de maintenir une pression élevée constante dans les machines de production d'air tout en devant brider des vannes pour ajuster le débit d'air en entrée du bassin biologique.

Enfin, pour un débit d'air fixé, un gain de pression dans le système de distribution d'air est directement associé à un gain de puissance sur la machine de production d'air.

Outre les caractéristiques principales qui viennent d'être mentionnées dans les paragraphes précédents, le procédé selon l'invention peut présenter une ou plusieurs caractéristiques complémentaires parmi les suivantes, considérées individuellement ou selon les combinaisons techniquement possibles :
- l'identification de la demande maximale en air du bassin biologique et la vitesse d'accroissement de la demande en air du bassin biologique sont calculées à partir du débit d'air dans le moyen de diffusion d'air sur une période de temps prédéterminée.
- le système comprend un moyen de calcul, et le procédé comprend délivrer par le moyen de calcul la valeur de pression (B) pour le au moins un pas de temps d'une pluralité de pas de temps prédéterminés, ladite valeur de pression (B) étant calculée pour l'au moins pas de temps à partir de l'occurrence temporelle de la demande maximale en air du bassin biologique et de la vitesse d'accroissement de la demande en air du bassin biologique délivrés par le moyen d'analyse par série temporelle pour le pas de temps prédéterminé.
- le deuxième moyen de régulation comprend un régulateur du type « proportionnel intégral dérivé ».
- le deuxième moyen de régulation variable des vannes d'alimentation en air comprend un régulateur du type « commande sans modèle ».
- la consigne prédéterminée d'ouverture de vanne d'alimentation est comprise entre 50 et 90%, et préférentiellement égale à 70%, d'ouverture de vanne d'alimentation.

Ce procédé de contrôle permet de réguler la pression à appliquer en entrée de la machine de production d'air en temps réel en fonction de la demande en air du bassin et de façon à ajuster la pression de la machine de production d'air à la valeur minimum requise permettant d'assurer un débit d'oxygène suffisant pour chacun des bassins.

### BREVE DESCRIPTION DES FIGURES

D'autres caractéristiques et avantages de l'invention ressortiront à la lecture de la description qui suit, en référence aux figures annexées, qui illustrent :
- la figure 1, une vue schématique d'un système d'alimentation en air de bassins biologiques de traitement d'eau de l'art antérieur ;
- la figure 2, une vue schématique de la régulation d'air centralisée de bassins biologiques de traitement d'eau de l'art antérieur
- la figure 3, une vue schématique d'un système d'alimentation en air de bassins biologiques de traitement d'eau dans lequel l'invention peut être mise en oeuvre ;
- la figure 4, une vue schématique des étapes réalisées par l'invention permettant de réguler la pression d'air dans le carnau d'alimentation des bassins biologiques afin d'optimiser la consommation énergétique des machines de production d'air.

Pour plus de clarté, les éléments identiques ou similaires sont repérés par des signes de référence identiques sur l'ensemble des figures.

### DESCRIPTION DETAILLEE D'UN MODE DE REALISATION

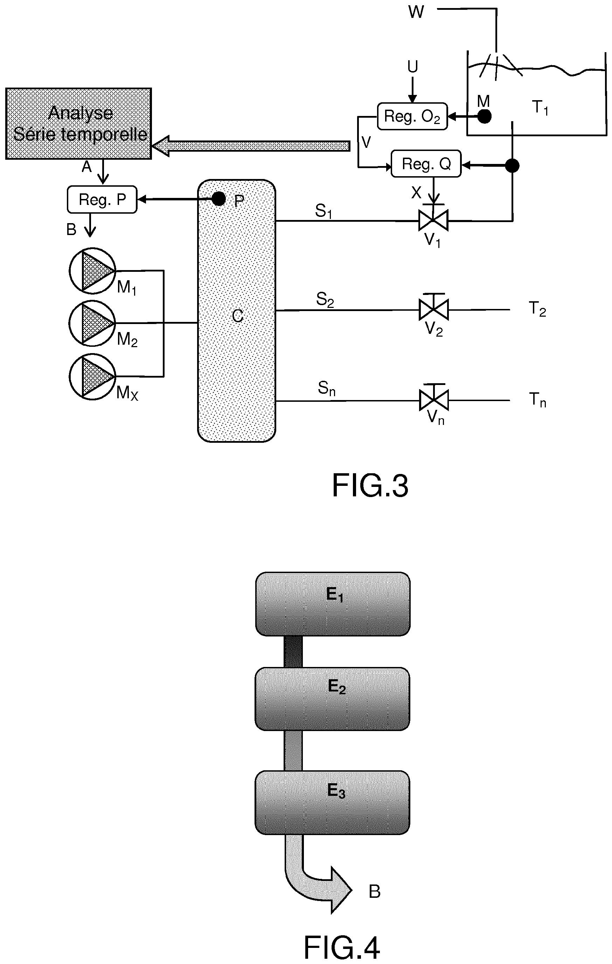

La figure 3 représente un système d'alimentation en air d'au moins deux bassins biologiques de traitement d'eau (un seul bassin biologique est représenté, le bassin T1 dans lequel de l'eau à traiter W est envoyée).

Le système comporte également trois machines de production d'air (M₁, M₂, M_{X}). Chacune des machines de production d'air est reliée à un carnau commun C d'un moyen de distribution d'air. Le carnau commun est relié à au moins deux soutirages d'air S1 et S2, chacun des soutirages d'air étant relié à un bassin biologique respectif. Les soutirages d'air font partie du moyen de distribution d'air. Entre le carnau et chacun des bassins biologiques, une vanne d'alimentation V₁, V₂, Vₙ est disposée respectivement sur les soutirages d'air S1, S2, Sn.

A la figure 3, est illustré un premier moyen de régulation Reg.P de la pression B de la machine de production d'air. Le premier moyen de régulation reçoit une valeur de pression P du carnau C et une consigne A variable dans le temps et déterminée à partir d'une prédiction de la demande en air du bassin biologique T1. A cet effet, le système de distribution en air du bassin biologique T1 comporte un moyen de diffusion d'air reliant le moyen de distribution d'air au bassin biologique. Un moyen de mesure du débit N est relié à un moyen d'analyse par série temporelle du premier moyen de régulation. Ce moyen d'analyse par série temporelle enregistre pour une période de temps prédéterminée le débit d'air du diffuseur d'air en entrée du bassin biologique. Un moyen de calcul distinct du moyen d'analyse par série temporelle peut également effectuer cet enregistrement.

Les valeurs de débit d'air pour la période de temps prédéterminée sont envoyées au moyen d'analyse par série temporelle qui délivre pour un pas de temps prédéterminé, par exemple 5mn, sur la période de temps prédéterminée, par exemple 3 jours, l'occurrence temporelle de la demande maximale en air du bassin biologique et la vitesse d'accroissement de la demande en air du bassin biologique. Ce pas de temps ne peut pas être trop court car il est en en lien avec la dynamique des machines de production d'air ni trop long car on perdrait l'intérêt d'une consigne de pression des machines de production d'air variable. Il s'agit donc d'un compromis issu d'une discussion avec l'exploitant. Ce pas de temps est fixe mais pourrait être variable.

Dans cet exemple de réalisation, le moyen d'analyse par série temporelle identifie l'occurrence temporelle de la demande maximale en air du bassin biologique et la vitesse d'accroissement de la demande en air du bassin biologique pour des pas de temps de 5mn pour une période de temps de trois jours de mesure. A partir de ces deux valeurs et de la demande en air actuelle, le moyen d'analyse par série temporelle calcule, par exemple par prolongement polynomial, pour la durée à venir, correspondant au pas de temps prédéterminé, la valeur de consigne A de pression à envoyer au premier moyen de régulation Reg P. Le pas de temps prédéterminé est choisi afin de permettre au système de distribution d'air de faire varier sa pression. Ainsi, le moyen d'analyse par série temporelle envoie à t0 la valeur de consigne de pression à appliquer à t0+pasdetemps à la machine de production d'air.

A la figure 3 est également illustrée la régulation de la première ligne de production d'air comportant le soutirage d'air S1 et la vanne d'alimentation V1. La vanne d'alimentation V1 est régulée en ouverture par un deuxième moyen de régulation du type régulateur proportionnel en cascade Reg. 02, Reg. Q dans ce mode de réalisation. Le deuxième moyen de régulation comporte donc un premier régulateur Reg. O2 en cascade avec un deuxième régulateur Reg. Q. Il peut s'agir de régulateurs du type commande sans modèle.

Le premier régulateur Reg. 02 reçoit en entrée une valeur de la teneur en oxygène ou en nitrates ou en turbidité M du bassin et une consigne U caractérisant l'ouverture de la vanne d'alimentation. Il délivre en sortie une consigne d'ouverture de la vanne d'alimentation v envoyée dans le deuxième régulateur Reg. Q qui reçoit en entrée le débit d'air N en entrée du bassin biologique. Le deuxième régulateur délivre en sortie un pourcentage d'ouverture x de la vanne d'alimentation.

Le premier régulateur Reg. 02 correspond à la teneur en oxygène du bassin et a une constante de temps très élevé. Le second régulateur Reg. Q correspond au pourcentage d'ouverture de la vanne et a une constante de temps très courte. Etant donné qu'on souhaite commander l'ouverture de la vanne à partir de la teneur en oxygène du bassin, on utilise un régulateur en cascade à cause des différences de dynamiques des deux sous-systèmes.

Le deuxième régulateur Reg. Q du régulateur en cascade peut être directement intégré à la vanne d'alimentation. Le deuxième moyen de régulation n'est pas indispensable.

Ce régulateur proportionnel reçoit en entrée les données provenant d'un moyen de mesure, du type capteur, de la teneur en oxygène du bassin biologique alimenté par le soutirage S1 et la vanne V1. La consigne envoyée sur le régulateur est prédéterminée. La vanne d'alimentation V1 a donc une ouverture constante en mode de fonctionnement normal, c'est-à-dire en l'absence de perturbation. Nul besoin de préciser que cette vanne est utile pour le rejet des perturbations non considérées lors de l'analyse des chroniques des demandes des jours précédents. C'est par ailleurs aussi ce qui guide d'une part le choix du point de fonctionnement (qui doit laisser une certaine marge à cette action de rejet de perturbation) et d'autre part l'utilisation d'une commande performante, la commande sans modèle.

A la figure 4 sont illustrées les étapes d'un procédé de contrôle de l'alimentation en air d'au moins deux bassins biologiques de traitement d'eau au moyen d'un système tel que celui illustré à la figure 3. Dans cet exemple particulier, le procédé comporte une étape préliminaire E1 de détermination de la consigne d'ouverture de vanne à appliquer à chacun des régulateurs des vannes d'alimentation des soutirages d'air reliant le carnau commun à chacun des bassins biologiques. Le procédé comporte également une étape E2, dite d'analyse saisonnière, de détermination de la demande en air du bassin biologique sur une période de temps prédéterminée. L'étape E2 consiste à déterminer sur la période de temps prédéterminée, par exemple plusieurs jours, l'occurrence temporelle de la demande maximale en oxygène de chacun des bassins biologiques, l'heure à laquelle elle a lieu et la vitesse d'accroissement de la demande en oxygène de chacun des bassins biologiques. A partir des données déterminées au cours de l'étape d'analyse saisonnière, le procédé, lors de l' étape E3 calcule la pression P à appliquer à la machine de production d'air sur un pas de temps prédéterminé de la période prédéterminée, qui peut être par exemple les cinq prochaines minutes. Ce procédé est réitéré de façon successive, ce qui aboutit à un contrôle en temps réel de la pression P à appliquer à la machine de production d'air.

L'invention n'est pas limitée aux modes de réalisation précédemment décrits en référence aux figures et des variantes pourraient être envisagées sans sortir du cadre de l'invention, à condition qu'elles soient couvertes par la portée des revendications jointes.

## Revendications

1. Procédé de régulation de l'alimentation en air d'au moins un bassin biologique de traitement d'eau, ledit au moins un bassin biologique de traitement d'eau étant alimenté en air par un système comportant :
- au moins une machine de production d'air (M₁, M₂, M_{X});
- au moins un système de distribution en air du bassin biologique, ledit système comprenant :
- un moyen de distribution d'air (C, S₁, S₂, Sₙ) reliant la machine de production d'air au bassin biologique, le moyen de distribution d'air comprenant une vanne d'alimentation (V1, V2, Vn) ;
- un premier moyen de régulation (Reg. P) de la pression de la machine de production d'air (M₁, M₂, Mₓ), comprenant un moyen d'analyse par série temporelle
- un moyen de diffusion d'air reliant le moyen de distribution d'air au bassin biologique
- un moyen de mesure (N) du débit du moyen de diffusion d'air, ledit moyen de mesure du débit étant relié au moyen d'analyse par série temporelle du premier moyen de régulation
- ledit premier moyen de régulation recevant une valeur de pression du moyen de distribution d'air (P) et la consigne (A) de pression variable dans le temps et délivrant en réponse une valeur de pression (B) envoyée comme consigne de pression à la machine de production d'air,
- un deuxième moyen de régulation (Reg.02) de l'ouverture de ladite vanne d'alimentation
ledit procédé comprenant :
- une étape préliminaire (E1) de caractérisation de la vanne d'alimentation du moyen de distribution d'air par le deuxième moyen de régulation (Reg.02), l'étape préliminaire comprenant recevoir une mesure d'un paramètre physico-chimique du bassin biologique (M) et une consigne prédéterminée d'ouverture de vanne d'alimentation (U) et fixer un degré d'ouverture de la vanne d'alimentation en fonction d'une caractérisation de la vanne réalisée sur site ;
- une étape (E2) de détermination, pour un pas de temps prédéterminé, d'une occurrence temporelle d'une demande maximale en air du bassin biologique et d'une vitesse d'accroissement de la demande en air du bassin biologique;
- une étape (E3) de calcul comprenant recevoir au moyen de régulation une valeur de pression du moyen de distribution d'air (P) et une consigne (A) calculée pour une durée à venir correspondant au pas de temps prédéterminé de pression variable dans le temps et calculer par le premier moyen de régulation une valeur de pression (B) de commande, pour une durée à venir correspondant au pas de temps prédéterminé à envoyer à la machine de production d'air en fonction de :
- l'occurrence temporelle de la demande maximale en air du bassin biologique,
- la vitesse d'accroissement de la demande en air du bassin biologique,
- la demande en air du bassin biologique.

2. Procédé selon la revendication 1, dans lequel, l'identification de la demande maximale en air du bassin biologique et la vitesse d'accroissement de la demande en air du bassin biologique sont calculées à partir du débit d'air dans le moyen de diffusion d'air sur une période de temps prédéterminée.

3. Procédé selon l'une des revendications 1 ou 2, dans lequel le système comprend un moyen de calcul, et le procédé comprend délivrer par le moyen de calcul la valeur de pression (B) pour le au moins un pas de temps d'une pluralité de pas de temps prédéterminés, ladite valeur de pression (B) étant calculée pour l'au moins pas de temps à partir de l'occurrence temporelle de la demande maximale en air du bassin biologique et de la vitesse d'accroissement de la demande en air du bassin biologique délivrés par le moyen d'analyse par série temporelle pour le pas de temps prédéterminé.

4. Procédé selon la revendication 1 à 3, **caractérisé en ce que** le deuxième moyen de régulation comprend un régulateur du type « proportionnel intégral dérivé ».

5. Procédé selon la revendication 1 ou 4, **caractérisé en ce que** le deuxième moyen de régulation variable des vannes d'alimentation en air comprend un régulateur du type « commande sans modèle ».

6. Procédé selon l'une quelconque des revendications précédentes, **caractérisé en ce que** la consigne prédéterminée d'ouverture de vanne d'alimentation est comprise entre 50 et 90%, et préférentiellement égale à 70%, d'ouverture de vanne d'alimentation.

## Patentansprüche

1. Verfahren zum Regeln der Luftzufuhr zu mindestens einem biologischen Wasseraufbereitungsbecken, wobei das mindestens eine biologische Wasseraufbereitungsbecken durch ein System mit Luft versorgt wird, das Folgendes aufweist:
- mindestens eine Lufterzeugungsmaschine (M₁, M₂, Mₓ);
- mindestens ein Luftverteilungssystem des biologischen Beckens, wobei das System Folgendes umfasst:
- ein Luftverteilungsmittel (C, S₁, S₂, Sₙ), das die Lufterzeugungsmaschine mit dem biologischen Becken verbindet, wobei das Luftverteilungsmittel ein Zufuhrventil (V1, V2, Vn) umfasst;
- ein erstes Regulierittel (Reg. P) des Drucks der Lufterzeugungsmaschine (M₁, M₂, Mₓ), das ein Zeitreihenanalysemittel umfasst;
- ein Luftdiffusionsmittel, das das Luftverteilungsmittel mit dem biologischen Becken verbindet;
- ein Messmittel (N) der Durchflussmenge des Luftdiffusionsmittels, wobei das Messmittel der Durchflussmenge mit dem Zeitreihenanalysemittel des ersten Reguliermittels verbunden ist;
- wobei das erste Reguliermittel einen Druckwert von dem Luftverteilungsmittel (P) und den zeitvariablen Drucksollwert (A) empfängt und als Reaktion darauf einen Druckwert (B) ausgibt, der als Drucksollwert an die Lufterzeugungsmaschine gesendet wird,
- ein zweites Reguliermittel (Reg.O2) der Öffnung des Zufuhrventils,
wobei das Verfahren Folgendes umfasst:
- einen Vorabschritt (E1) des Charakterisierens des Zufuhrventils des Luftverteilungsmittels durch das zweite Reguliermittel (Reg.O2), wobei der Vorabschritt das Empfangen eines Messwerts eines physikalisch-chemischen Parameters des biologischen Beckens (M) und eines vorbestimmten Sollwerts der Zufuhrventilöffnung (U) und das Festlegen eines Öffnungsgrads des Zufuhrventils in Abhängigkeit von einer vor Ort durchgeführten Charakterisierung des Ventils umfasst;
- einen Schritt (E2) des Bestimmens, für einen vorbestimmten Zeitschritt, eines zeitlichen Auftretens eines maximalen Luftbedarfs des biologischen Beckens und einer Geschwindigkeit der Zunahme des Luftbedarfs des biologischen Beckens;
- einen Berechnungsschritt (E3), der das Empfangen, am Reguliermittel, eines Druckwerts von dem Luftverteilungsmittel (P) und eines berechneten Sollwerts (A) für eine kommende Dauer entsprechend dem vorbestimmten Zeitschritt des zeitlich veränderlichen Drucks und das Berechnen, durch das erste Reguliermittel, eines Steuerdruckwerts (B) für eine kommende Dauer entsprechend dem vorbestimmten Zeitschritt zum Senden an die Lufterzeugungsmaschine umfasst, in Abhängigkeit von:
- dem zeitlichen Auftreten des maximalen Luftbedarfs des biologischen Beckens,
- der Geschwindigkeit der Zunahme des Luftbedarfs des biologischen Beckens,
- dem Luftbedarf des biologischen Beckens.

2. Verfahren nach Anspruch 1, wobei das Ermitteln des maximalen Luftbedarfs des biologischen Beckens und der Geschwindigkeit der Zunahme des Luftbedarfs des biologischen Beckens aus der Luftdurchflussmenge in dem Luftdiffusionsmittel über einen vorbestimmten Zeitraum berechnet werden.

3. Verfahren nach einem der Ansprüche 1 oder 2, wobei das System ein Berechnungsmittel umfasst, und das Verfahren das Ausgeben, durch das Berechnungsmittel, des Druckwerts (B) für den mindestens einen Zeitschritt einer Vielzahl von vorbestimmten Zeitschritten umfasst, wobei der Druckwert (B) für den mindestens einen Zeitschritt aus dem zeitlichen Auftreten des maximalen Luftbedarfs des biologischen Beckens und der Geschwindigkeit der Zunahme des Luftbedarfs des biologischen Beckens berechnet wird, die von dem Zeitserienanalysemittel für den vorbestimmten Zeitschritt ausgegeben werden.

4. Verfahren nach Anspruch 1 bis 3, **dadurch gekennzeichnet, dass** das zweite Reguliermittel einen Regler des Typs "Proportional-Integral-Differential" umfasst.

5. Verfahren nach Anspruch 1 oder 4, **dadurch gekennzeichnet, dass** das zweite Mittel zur variablen Regulierung der Luftzufuhrventile einen Regler des Typs "modellfreie Regelung" umfasst.

6. Verfahren nach einem der vorhergehenden Ansprüche, **dadurch gekennzeichnet, dass** der vorbestimmte Sollwert für die Öffnung des Zufuhrventils zwischen 50 und 90 %, und vorzugsweise bei 70 %, der Öffnung des Zufuhrventils liegt.

## Claims

1. A method for regulating the air supply to at least one biological water treatment basin, said at least one biological water treatment basin being supplied with air by a system having:
- at least one air production machine (M₁, M₂, Mₓ);
- at least one air distribution system of the biological basin, said system comprising:
- an air distribution means (C, S₁, S₂, Sₙ) connecting the air production machine to the biological basin, said air distribution means comprising a supply valve (V1, V2, Vn);
- a first regulation means (Reg. P) of the pressure of the air production machine (M₁, M₂, Mₓ), comprising a time series analysis means
- an air diffusion means connecting the air distribution means to the biological basin
- a means (N) for measuring the flow rate of the air diffusion means, said means for measuring the flow rate being connected to the time series analysis means of the first regulation means
- said first regulation means receiving a pressure value from the air distribution means (P) and the time-variable pressure setpoint (A) and delivering in response a pressure value (B) sent as pressure setpoint to the air production machine,
- a second regulation means (Reg.O2) of the opening of said supply valve
said method comprising:
- a preliminary step (E1) of characterising the supply valve of the air distribution means by the second regulation means (Reg.02), the preliminary step comprising receiving a measurement of a physico-chemical parameter of the biological basin (M) and a predetermined setpoint of the opening of the supply valve (U) and setting a degree of opening of the supply valve based on an on-site characterisation of the valve;
- a step (E2) of determining, for a predetermined time step, a temporal occurrence of a maximum demand for air in the biological basin and a rate of increase in the demand for air in the biological basin;
- a calculation step (E3) comprising receiving at the regulation means a pressure value from the air distribution means (P) and a setpoint (A) calculated for a duration to come corresponding to the predetermined time step of time-variable pressure and calculating, by the first regulation means, a control pressure value (B), for a duration to come corresponding to the predetermined time step to be sent to the air production machine according to:
- the temporal occurrence of the maximum air demand of the biological basin,
- the rate of increase in the air demand of the biological basin,
- the air demand of the biological basin.

2. The method according to claim 1, wherein the identification of the maximum air demand of the biological basin and the rate of increase of the air demand of the biological basin are calculated from the air flow in the air diffusion means over a pre-determined time period.

3. The method according to one of claims 1 or 2, wherein the system comprises a calculation means, and the method comprises delivering, by the calculation means, the pressure value (B) for the at least one time step of a plurality of predetermined time steps, said pressure value (B) being calculated for the at least one time step from the temporal occurrence of the maximum air demand of the biological basin and the rate of increase of the air demand of the biological basin delivered by the time series analysis means for the predetermined time step.

4. The method according to claim 1 to 3, **characterised in that** the second means of regulation comprises a regulator of the "proportional integral derivative" type.

5. The method according to claim 1 or 4, **characterised in that** the second means of variable regulation of the air supply valves comprises a regulator of the "control without model" type.

6. The method according to any one of the preceding claims, **characterised in that** the predetermined supply valve opening setpoint is between 50 and 90 %, and preferably equal to 70 %, of the opening of the supply valve.
